# EUROPÄISCHE PATENTANMELDUNG

(11) **EP 0 909 534 A2**
(43) Veröffentlichungstag der Anmeldung: **21.04.1999**
(21) Anmeldenummer: 98114359.7
(22) Anmeldetag: 30.07.1998
(51) Int. Cl.: A21C 1/06

(54) **Vorrichtung zum Extrudieren von plastischen Massen für den Lebensmittel-, Futtermittel- und Pharmabereich, insbesondere für Brotteige**

(30) Priorität: 30.07.1997 DE 29713574 U
(71) Anmelder: Kientsch, Bernd, 75433 Maulbronn (DE)
(72) Erfinder: Kientsch, Bernd, 75433 Maulbronn (DE)
(74) Vertreter: Leitner, Waldemar, Dr. techn.

(57) **Zusammenfassung**

Beschrieben wird eine Vorrichtung zum Extrudieren von plastischen Massen für den Lebensmittel-, Futtermittel- und Pharmabereich, insbesondere für Brotteige, die ein Gehäuse mit einer Eintrittsöffnung und eine Austrittsöffnung für die plastische Masse aufweist, wobei in dem Gehäuse der Vorrichtung eine Förderwalze angeordnet ist, durch die die plastische Masse zu einer im Gehäuse angeordneten, mit der Förderwalze zusammenwirkenden Ausräumeranordnung transportierbar ist, durch welche die plastische Masse von der Förderwalze weg zu Austrittsöffnung der Vorrichtung leitbar ist.

Erfindungsgemäß ist vorgesehen, daß die Förderwalze als ein Förderrotor mit mehreren Förderscheiben ausgebildet ist, durch die die zu verpressende plastische Masse durch Reibschluß in durch die Förderscheiben festgelegten Förderkanälen förderbar ist, und daß die Ausräumeranordnung kammartig ausgebildet ist und mehrere, durch einen Schlitz getrennte Segmente aufweist, die in die Förderkanäle eingreifen, so daß die plastische Masse von den in die Förderkanäle eingreifenden Segmenten aus den Förderkanälen und somit vom Förderrotor weg und zur Austrittsöffnung abgelenkt wird.

## Beschreibung

Die Erfndung betrifft eine Vorrichtung zum Extrudieren von plastischen Massen für den Lebensmittel-, Futtermittel- und Pharmabereich, insbesondere für Brotteige, die ein Gehäuse mit einer Eintrittsöffnung und einer Austrittsöffnung für die plastische Masse aufweist, wobei in dem Gehäuse der Vorrichtung eine Förderwalze angeordnet ist, durch die die plastische Masse zu einer im Gehäuse angeordneten, mit der Förderwalze zusammenwirkenden Ausräumeranordnung transportierbar ist, durch welche die plastische Masse von der Förderwalze weg zur Austrittsöffnung der Vorrichtung leitbar ist.

Eine derartige Vorrichtung zum kontinuierlichen Auspressen plastischer, hochviskoser Stoffe, insbesondere von Brotteig, ist bekannt Diese weist einen über der Eintrittsöffnung des Gehäuses angeordneten Vorratsbehälter für die zu verarbeitende plastische Masse auf. Im Bereich der Eintrittsöffnung ist eine Beschikkungswalze angeordnet, die mit der im Gehäuse angeordneten Förderwalze zusammenwirkt. Die Förderwalze besteht aus zwei mit Zwischenraum koaxial gelagerten Walzen, wobei die äußere der beiden Walzen als Schaufelwalze und die innere als Adhäsionswalze ausgebildet ist. Durch eine Öffnung in der Schaufelwalze wird der zu verpressende Stoff aus dem Vorratsbehälter abgesaugt und gegen die Adhäsionswalze gedrückt. Durch die Kraftbeaufschlagung der Schaufeln der Schaufelwalze wird dann der Brotteig zu dem zwischen den beiden Walzen angeordneten Ausräumer befördert und von diesem abgelenkt und zu einem die Austrittsöffnung ausbildenden Mundstück gebracht.

Nachteilig an der bekannten Vorrichtung ist ihr aufwendiger Aufbau und die daraus resultierende Wartungs- und Reinigungsunfreundlichkeit. Außerdem besitzt der zwischen den beiden Walzen angeordnete Ausräumer den Nachteil, daß hierdurch ein unterschiedlicher Druckaufbau im Austrittsbereich des zu verpressenden Stoffes ausgebildet wird, welcher sich negativ auf die Konsistenz des verpreßten Brotteiges und auf dessen Porenbild auswirkt. Ein weiterer Nachteil besteht darin, daß infolge der Anordnung der Ausräumeranordnung zwischen den beiden rotierenden Walzen der in dem durch die Adhäsionswalze und die Schaufelwalze begrenzten Förderkanal befindliche Brotteig nicht vollständig aus diesem Förderkanal entfernbar ist, da die Ausräumeranordnung mit Spiel zwischen den beiden mit gleicher Drehgeschwindigkeit rotierenden Walzen angeordnet ist, so daß im Bereich zwischen einer der Adhäsionswalze zugewandten Unterseite der Ausräumeranordnung sowie einer der Schaufelwalze zugewandten Oberseite der Ausräumeranordnung stets Brotteig in nachteiliger Art und Weise nicht aus dem Kanal entfernt wird.

Aus der DE-OS 28 12 963 ist eine Strangpresse für plastische Massen bekannt, die mit einer die Massen durch Reibschluß fördernden Fördertrommel ausgerüstet ist. Hierbei ist vorgesehen, daß die die plastische Masse fördernden Teile der Fördertrommel Taschen bildende Vertiefungen zum bleibenden Festsetzen von Teilen der zu fördernden Masse aufweisen. Eine derartige Konstruktion ist zwar möglicherweise zum Strangpressen von Ton oder ähnlichen Materialien geeignet; sie eignet sich aber nicht für den Einsatz im Lebensmittel- und Pharmabereich, da aus hygienischen Gründen hier unbedingt vermieden werden muß, daß Teile des plastischen Materials im Förderkanal verbleiben und sich dort bleibend festsetzen.

Aus der DE-PS 4 735 10 ist eine Teilmaschine für Teig und ähnliche knetbere massen, bei welcher der Teig aus einem Fülltrichter in eine Meß- oder Ausstoßkammer eingeführt wird, bekannt. In den Fülltrichter ist die zu verarbeitende Masse einfüllbar. Von diesem gelangt die zu verarbeitende, knetbare Masse in eine Walze, die über ihre Länge verteilt, eine Anzahl ringscheibenförmiger Rippen besitzt. Die beiden an den Enden der Walze angebrachten Rippen liegen mit ihrer Außenseite dicht an den Seitenwänden des Fülltrichters an. An einer Wand des Fülltrichters ist eine Rutsche in Gestalt eines Leitblechs befestigt, welche den Teig in Richtung des Umlaufs der Walze zur Walze hinleitet. Unterhalb der Walze ist ein Abstreicher befestigt, der an seinem freien Ende dem Profil der Walze entsprechend ausgeschnitten ist. Die Walze wirkt mit einer Zuführwalze zusammen, welche entgegengesetzt zur Walze umläuft und von der der Walze gegenüberliegenden Seite auf den Teig einwirkt, um diesen zu einer Förderschnecke zu befördern, welche dann den Teig zu einer Austrittsöffnung der Teilmaschine befördert.

Aus der DE-PS 4 74 277 ist noch bekannt, die aus der vorstehend beschriebenen DE-PS 4 73 510 bekannte Teilmaschine dergestalt weiterzubilden, daß oberhalb der Öffnung der zu füllenden, die Förderschnecke aufnehmenden Kammer eine Stabtrommel vorgesehen ist, welche einerseits den Teig zuführt und verteilt, andererseits bei zu starker Zufuhr den Teig nach oben entführt oder ausweichen läßt.

Beide bekannte Teilmaschinen besitzen den Nachteil, daß zur Förderung und zum Austrag des Teigs eine Förderschnecke eingesetzt wird. Dies bringt in nachteiliger Art und Weise eine hohe Beanspruchung des zu verarbeitenden Teigs oder ähnlicher knetbarer Massen mit sich, da die Schneckengeometrie infolge der unterschiedlichen Schneckenkerndurchmesser und Schneckenaußendurchmesser unterschiedliche Steigungswinkel aufweisen und es dadurch zu unterschiedlichen Geschwindigkeiten und ungleiche Strömungsgeschwindigkeiten der zu verarbeitenden Masse kommt. Hierdurch werden erhebliche Scherkräfte erzeugt und es läßt sich eine ungewünschte Rückströmung am Schneckenausgang nicht vermeiden. Diese Einflußgrößen zerstören teilweise die Faserung des Teigs oder ähnlicher knetbarer Massen und bringen daher Qualitätsnachteile mit sich. Weiterhin entstehen dadurch Texturen im Produkt. Außerdem wird bei empfindlichen Masen wie Marzipan oder ähnlichen Materialien das für das Produkt wertvolle Mandelöl teilweise abgepreßt.

Es ist daher die Aufgabe der Erfindung, eine Vorrichtung der eingangs genannten Art derart weiterzubilden, daß bei einer einfachen und wartungsfreundlichen Konstruktion ein Extrudieren von plastischen Massen des Lebensmittel-, Futtermittel-und Pharmabereichs mit einer hohen Produktqualität möglich ist.

Diese Aufgabe wird erfindungsgemäß dadurch gelöst, daß die Förderwalze als ein Förderrotor mit mehreren Förderscheiben ausgebildet ist, durch die die zu verpressende plastische Masse durch Reibschluß in durch die Förderscheiben festgelegten Förderkanälen förderbar ist, und daß die Auräumeranordnung kammartig ausgebildet ist und mehrere, durch einen Schlitz getrennte Segmente aufweist, die in die Förderkanäle eingreifen, so daß die plastische Masse von den in die Förderkanäle eingreifenden Segmenten aus den Förderkanälen und somit vom Förderrotor weg und zur Austrittsöffnung abgelenkt wird

Der erfindungsgemäß vorgesehene Direktaustrag der plastischen Masse von dem Förderrotor zur Austrittsöffnung der Vorrichtung - ohne daß hierbei eine Förderschnecke dazwischengeschalten ist - besitzt den Vorteil, daß hierdurch eine besonders hohe Produktqualität und eine minimale Produktbeanspruchung durch das Fördersystem erzielbar ist. In vorteilhafter Art und Weise treten - wie es bei den bekannten Förderschnecken der Fall ist - keine Produktrückströmungen auf und die plastische Masse wird in einer einheitlichen, stetigen Förderbewegung vom Vorratsbehälter zur Austrittsöffnung durch den Förderrotor bewegt. Hierdurch ist somit weitgehend ausgeschlossen, daß durch das Fördersystem der erfindungsgemäßen Vorrichtung die Faserung der Produkte zerstört und/oder Texturen im Produkt entstehen.

Durch die erfindungsgemäßen Maßnahmen wird in vorteilhafter Art und Weise eine Vorrichtung zum Extrudieren von plastischen Stoffen für den Lebensmittel- und Pharmabereich ausgebildet, die sich durch ihre hohe Wartungs- und Reinigungsfreundlichkeit sowie durch ihre Produktqualität auszeichnet. Durch die beschriebene Ausbildung und Anordnung der Förderwalze und der Ausräumeranordnung ist es in vorteilhafter Art und Weise möglich, die gesamten Verarbeitungszonen der erfindungsgemäßen Vorrichtung in kürzester Zeit ohne Werkzeug freizulegen, wodurch kurze Umrüstzeiten und eine optimale Reinigung gewährleistet ist.

Ein weiterer Vorteil der erfindungsgemäßen Vorrichtung besteht darin, daß die Umlaufgeschwindigkeit von Förderwalze und Beschickungswalze unabhängig voneinander wählbar ist, so daß die erfindungsgemäße Vorrichtung besonders einfach unterschiedlichen Produktionsprozessen anpaßbar ist.

Ein weiterer Vorteil der erfindungsgemäßen Vorrichtung besteht darin, daß durch die reibschlüssige Förderung der plastischen Masse durch die Förderscheiben der Förderwalze ein gleichmäßiger Druckverlauf im Förderkanal ausgebildet ist, der sich in einem guten Porenbild der verpreßten plastischen Masse und in der bereits vorher erwähnten hohen Produktqualität niederschlägt.

Ein weiterer Vorteil der Erfindung besteht darin, daß das gesamte Fördersystem der erfindungsgemäßen Vorrichtung keine Schnittstellen aufweist und ohne jedigliches Trennöl arbeitet, so daß hochwertige Extrusionsprodukte garantiert sind.

Eine vorteilhafte Weiterbildung der Erfindung sieht vor, daß die auf den Förderrotor aufgesetzten Förderscheiben mit einer glatten, aufgerauhten oder aufgewalzten Oberflächenstruktur ausgebildet sind. Eine derartige Ausgestaltung der mit der plastischen Masse in Wirkeingriff stehenden Oberfläche der Förderscheiben besitzt den Vorteil, daß ein bleibendes Festsetzen von Teilen der plastischen Masse zuverlässig verhindert wird. Dies ist im Hinblick auf die zunehmenden steigenden Hygienestandards von großem Vorteil.

Eine weitere vorteilhafte Weiterbildung der Erfindung sieht vor, daß zumindest eine der Förderscheiben der Förderwalze mindestens ein Querloch aufweist, durch das die zu extrudierende plastische Masse von einem Förderkanal, der durch die mit dem mindestens einem Querloch versehene Förderscheibe und eine benachbarte Förderscheibe ausgebildet ist, in den benachbarten, entsprechend ausgebildeten Förderkanal übertreten kann. Eine derartige Ausgestaltung der Förderscheibe ist insbesondere dann von Vorteil, wenn Produktströmungen zwischen Förderkanälen der Förderwalze erforderlich sind.

Eine weitere vorteilhafte Weiterbildung der Erfindung sieht vor, daß mindestens eine der Förderscheiben der Förderwalze eine im wesentlichen kreisförmige Außenkontur mit in axialer Richtung verlaufenden Wellenlinien aufweist. Eine derartige Maßnahme besitzt den Vorteil, daß hierdurch eine gleichmäßige Kammerfüllung erzielbar ist.

Eine weitere vorteilhafte Weiterbildung der Erfindung sieht vor, daß die Förderscheiben auswechselbar auf dem Förderrotor der Förderwalze gelagert sind. Eine derartige Maßnahme besitzt den Vorteil, daß hierdurch ein variierbares Fördersystem geschaffen wird, das in vorteilhafter Art und Weise eine optimale Anpassung an den speziellen Verarbeitungsprozeß ermöglicht.

Eine weitere vorteilhafte Weiterbildung der Erfindung sieht vor, daß die Oberfläche der Beschickungswalze mit erhabenen Leisten, mit eingearbeiteten Nuten oder mit Querrillen ausgeführt ist. Eine derartige Maßnahme besitzt den Vorteil. daß der Wirkungsgrad der erfindungsgemäßen Vorrichtung erhöht wird.

Eine weitere vorteilhafte Weiterbildung der Erfindung sieht vor, daß die Beschikkungswalze und/oder die Förderwalze auf einer durchgehenden Achse angeordnet ist, die in Achslagern des Gehäuses aufgenommen ist. Eine derartige fliegende Lagerung der entsprechenden Walzen besitzt den Vorteil, daß diese besonders einfach aus dem Gehäuse entfernbar sind, wodurch die Wartungs- und Reinigungsfreundlichkeit nochmals erhöht wird.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, das im folgenden anhand der Figuren beschrieben wird. Es zeigen.
- Figur 1: eine schematische Darstellung eines Ausführungsbeispiels einer Vorrichtung zum Extrudieren von plastischen Massen,
- Figur 2: eine Draufsicht auf das Ausführungsbeispiel aus der Richtung II der Figur 1,
und
- Figur 3: eine schematische Darstellung des Fördersystems des Ausführungsbeispiels.

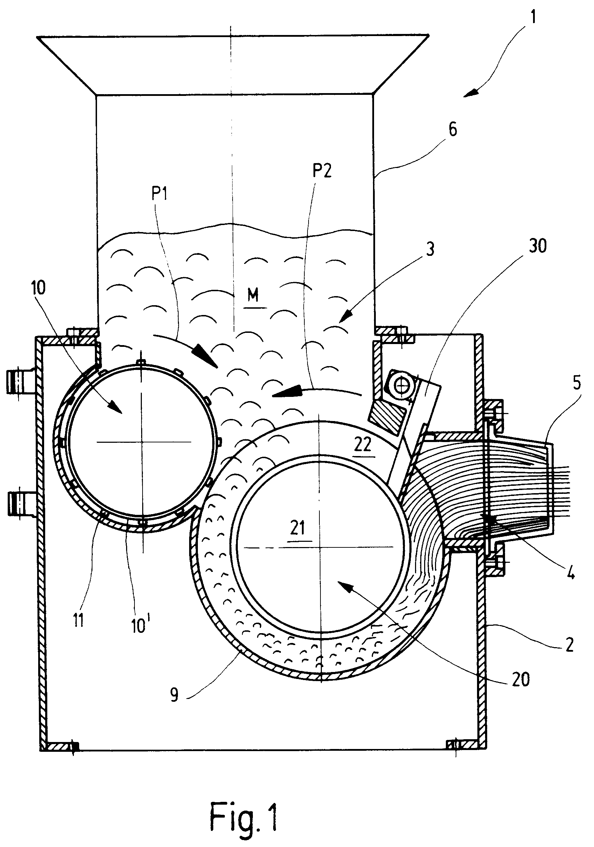

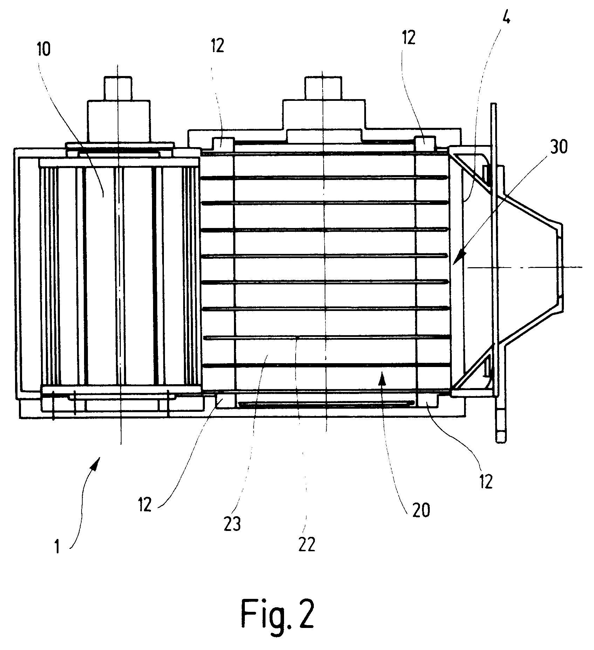

Die in den Figuren 1 und 2 dargestellte, allgemein mit 1 bezeichnete Vorrichtung zum Extrudieren von plastischen Massen des Lebensmittel-, Futtermittel- und Pharmabereichs gliedert sich im wesentlichen in ein Gehäuse 2, das eine Eintrittsöffnung 3 und eine Austrittsöffnung 4 mit einem Mundstück 5 aufweist. Über der Eintrittsöffnung 3 des Gehäuses 2 ist ein trichterförmiger Vorratsbehälter 6 angeordnet, in dem die zu extrudierende plastische Masse M einbringbar ist. Im Gehäuse 2 sind eine Beschickungswalze 10 und eine Förderwalze 20 angeordnet.

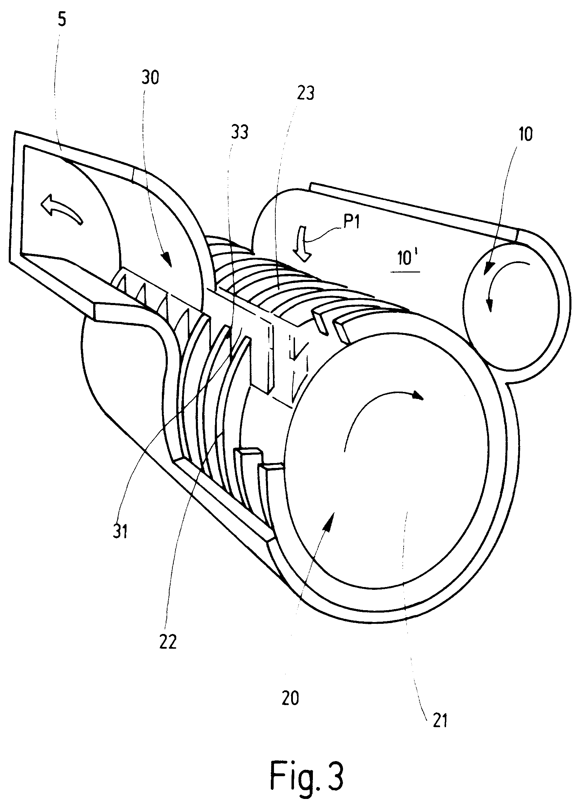

Die Förderwalze 20 ist als ein Förderrotor 21 ausgebildet, der - wie am besten aus den Figuren 2 und 3 ersichtlich ist - eine Mehrzahl von Förderscheiben 22 trägt, wobei jeweils benachbarte Förderscheiben 22 zusammen mit einem Leitelement 9 des Gehäuses 2 einen Förderkanal 23 für die zu extrudierende plastische Masse M begrenzen. In die Förderwalze 20 greift eine kammartig ausgebildete Ausräumeranordnung 30 derart ein, daß die einzelnen Segmente 31 der Ausräumeranordnung 30 in die Förderkanäle 23 eingreifen, während die Förderscheiben 22 in die einzelne Segmente 31 der kammartig ausgebildeten Ausräumeranordnung 30 trennenden Schlitze 33 eintauchen.

Die Funktionsweise der Vorrichtung 1 ist nun wie folgt:

Durch die Rotationsbewegung der Beschickungswalze 10 in Richtung des Pfeils P1 der Figur 1 in Verbindung mit der Rotationsbewegung der Förderwalze 20 in Richtung des Pfeiles P2 wird die im Vorratsbehälter 6 befindliche, zu extrudierende plastische Masse M aus dem Vorratsbehälter 6 abgesaugt und in Richtung der Förderkanäle 23 der Förderwalze 20 transportiert. Durch den Reibschluß zwischen der plastischen Masse M und den Förderscheiben 21 wird die plastische Masse M in die Förderkanäle 23 eingebracht und in diesen zur kammartigen Ausräumeranordnung 30 befördert.

Vorzugsweise ist hierbei vorgesehen, daß die Beschickungswalze 10 - wie am besten aus Figur 1 ersichtlich ist - erhabene Leisten 11 aufweist, wobei es aber auch möglich ist, anstelle der Leisten 11 oder zusätzlich zu diesen eingefräste Nuten oder eingefräste Rillen in der Oberfläche 10' der Beschickungswalze 10 vorzusehen. Diese Maßnahme besitzt den Vorteil, daß hierdurch ein gegenüber einer ebenfalls möglichen Beschickungswalze 10 mit glatter Oberfläche 10' verbesserter Einzug der plastischen Masse M in das durch die Förderwalze 10 in Zusammenwirken mit dem unter der Förderwalze 20 angeordneten, vorzugsweise glatten, polierten Leitelement 9 des Gehäuses 2 sowie der Ausräumeranordnung 30 ausgebildete Fördersystem bewirkt wird.

Zur Verbesserung des Reibschlusses zwischen der zu fördernden plastischen Masse M und den Förderscheiben 22 ist vorzugsweise vorgesehen, daß mindestens eine und vorzugsweise alle Förderscheiben 22 der Förderwalze 20 mit einer aufgerauhten oder aufgewalzten Oberflächenstruktur ausgebildet sind, so daß durch diese Maßnahme der Reibschluß zwischen der Förderwalze 20 und der plastischen Masse M verbessert wird, wobei aber ein nachteiliges bleibendes Festsetzen von Teilen der zu extrudierenden plastischen Masse an den Förderscheiben 22 verhindert wird.

Zusätzlich zu der oben beschriebenen Ausbildung der Oberflächenstruktur der Förderscheiben 22 kann noch optional vorgesehen sein, daß (in den Figuren nicht dargestellt) die kreisförmig ausgebildeten Förderscheiben 22 in axialer Richtung wellenförmig ausgebildet sind, so daß eine Art Kettenrad ausgebildet wird, welches in einer gleichmäßigen Kammerfüllung der extrudierten Masse M resultiert.

Die zur Ausräumeranordnung 30 beförderte plastische Masse M wird dann von deren in die Förderkanäle 23 eingreifenden Segmenten 31 aus den Förderkanälen 23 zur Austrittsöffnung 4 abgelenkt. Vorzugsweise ist vorgesehen, daß das in die Austrittsöffnung 4 eingesetzte Mundstück 5 auswechselbar ist, so daß der vom Mundstück 5 erzeugte, extrudierte Strang der plastischen Masse M durch ein einfaches Auswechseln des Mundstücks 5 leicht in seiner Form variierbar ist.

Die Portionierung der über das Mundstück 5 ausgetragenen plastischen Masse erfolgt in an für sich bekannter Art und Weise zum Beispiel über Lichtabtastung, Zeitrelais, Endtaster und über ein rotierendes Messer mit regelbarem Antrieb, wobei vorzugsweise der Abschneidevorgang elektrisch oder pneumatisch vorgenommen wird. Eine derartige Portionierung einer strangförmig verpreßten plastischen Masse M ist an und für sich bekannt und muß daher nicht näher beschrieben werden.

Dem Fachmann ist ersichtlich, daß die oben beschriebene Ausbildung der Vorrichtung 1 nur exemplarischen Charakter besitzt. Sie ist in Abhängigkeit von dem jeweils vorgesehenen Einsatzzweck in weiten Grenzen variierbar. So kann zum Beispiel vorgesehen sein, daß die Förderscheiben 22 auswechselbar auf dem Förderrotor 21 der Förderwalze 20 angeordnet sind. Hierdurch wird in vorteilhafter Weise ein variables Fördersystem geschaffen, das optimal auf den jeweiligen Verarbeitungsprozeß abgestimmt werden kann.

Vorzugsweise ist vorgesehen, daß alle mit der plastischen Masse M in Berührung kommenden Metallteile aus Edelstahl oder aus Bronze gefertigt sind, so daß ein hoher Hygienestandart gewährleistet ist.

Ein weiterer Vorteil der beschriebenen Vorrichtung besteht darin, daß die axiale Abdichtung der Förderwalze 20 durch die beim Fördervorgang auftretenden, konstruktiv bedingten Querkräfte erfolgt, die zur Abdichtung von Lagerringen 12 (s. Fig. 2) des Gehäuses, welche zur Aufnahme von Achsen, die die Beschickungswalze 10 und die Förderwalze 20 tragen, dienen, und den Förderscheiben 22 selbst führen.

Zusammenfassend ist festzustellen, daß die sich durch einen geringen Platzbedarf auszeichnende Vorrichtung 1 durch ein Austragungsverfahren auszeichnet. bei dem keine nennenswerte Produktbeeinträchtigung gegeben ist. Das ohne Trennöl arbeitende Fördersystem erlaubt eine einfach Reinigung und trotzdem einen hohen Hygienestandard, wo außerdem eine hohe Durchsatzleistung gegeben ist.

## Patentansprüche

1. Vorrichtung zum Extrudieren von plastischen Massen für den Lebensmittel-, Futtermittel- und Pharmabereich, insbesondere für Brotteige, die ein Gehäuse (2) mit einer Eintrittsöffnung (3) und eine Austrittsöffnung (4) für die plastische Masse (M) aufweist, wobei in dem Gehäuse (2) der Vorrichtung (1) eine Förderwalze (20) angeordnet ist, durch die die plastische Masse (M) zu einer im Gehäuse (2) angeordneten, mit der Förderwalze (20) zusammenwirkenden Ausräumeranordnung (30) transportierbar ist, durch welche die plastische Masse (M) von der Förderwalze (20) weg zu Austrittsöffnung (4) der Vorrichtung (1) leitbar ist, dadurch gekennzeichnet, daß die Förderwalze (20) als ein Förderrotor (21) mit mehreren Förderscheiben (22) ausgebildet ist, durch die die zu verpressende plastische Masse (M) durch Reibschluß in durch die Förderscheiben (22) festgelegten Förderkanälen (23) förderbar ist, und daß die Ausräumeranordnung (30) kammartig ausgebildet ist und mehrere, durch einen Schlitz (33) getrennte Segmente (31) aufweist, die in die Förderkanäle (23) eingreifen, so daß die plastische Masse (M) von den in die Förderkanäle (23) eingreifenden Segmenten (31) aus den Förderkanälen (23) und somit vom Förderrotor (21) weg und zur Austrittsöffnung (4) abgelenkt wird.

2. Vorrichtung nach Anspruch 1, dadurch gekennzeichnet, daß mindestens eine der Förderscheiben (22) eine aufgerauhte oder aufgewalzte Oberflächenstruktur aufweist.

3. Vorrichtung nach einem der Ansprüche 1 oder 2, dadurch gekennzeichnet, daß mindestens eine der Förderscheiben (22) ein Querloch aufweist.

4. Vorrichtung nach einem der Ansprüche 1 bis 3, dadurch gekennzeichnet, daß mindestens eine der Förderscheiben (22) eine kreisförmige Außenkontur mit in axialer Richtung verlaufender Wellenlinien aufweist.

5. Vorrichtung nach einem der Ansprüche 1 bis 4, dadurch gekennzeichnet, daß mindestens eine der Förderscheiben (22) auswechselbar auf dem Förderrotor (21) der Förderwalze (20) angeordnet ist.

6. Vorrichtung nach Anspruch 1, dadurch gekennzeichnet, daß die Vorrichtung eine Beschickungswalze (10) aufweist, und daß die Beschickungswalze (10) an ihrer Oberfläche (10') erhabene Leisten (11) oder eingearbeitete Nuten oder eingefräste Rillen aufweist.

7. Vorrichtung nach einem der vorangehenden Ansprüche, dadurch gekennzeichnet, daß in die Austrittsöffnung (4) der Vorrichtung (1) ein Mundstück (5) einsetzbar ist.
